# EUROPEAN PATENT SPECIFICATION

(11) **EP 2 146 473 B1**
(45) Date of publication and mention of the grant of the patent: **11.09.2019**
(21) Application number: 08104750.8
(22) Date of filing: 15.07.2008
(51) Int. Cl.: H04M 11/06, H04B 3/487, H04L 5/00

(54) **Method and device for data processing and communication system comprising such device**
Verfahren und Vorrichtung zur Datenverarbeitung und Kommunikationssystem mit einer derartigen Vorrichtung
Procédé et dispositif de traitement de données et système de communication comprenant un tel dispositif

(43) Date of publication of application: 20.01.2010
(73) Proprietor: ADTRAN GmbH, 10557 Berlin (DE)
(72) Inventor: Ahrndt, Thomas, 85521, Ottobrunn (DE)
(74) Representative: Brachmann, Roland W.

(56) References cited:
- WO-A-2005/114861
- WO-A-2008/025581

## Description

The invention relates to a method and to a device for data processing and to a communication system comprising such device.

DSL or xDSL, is a family of technologies that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52 Mbit/s in downstream - 12 Mbit/s in upstream with asymmetric access.

According to its high bandwidth, VDSL is capable of supporting applications like HDTV, as well as telephone services (e.g., Voice over IP) and general Internet access, over a single connection.

VDSL2 (Very High Speed Digital Subscriber Line 2) is an access technology that exploits the existing infrastructure of copper wires that were originally used for plain old telephone service (POTS). It can be deployed from central offices (COs), from fiber-fed cabinets preferably located near the customer premises, or within buildings.

ITU-T G.993.2 (VDSL2) is an enhancement to G.993.1 (VDSL) that permits the transmission of asymmetric and symmetric (full duplex) aggregate data rates up to 200 Mbit/s on twisted pairs using a bandwidth up to 30 MHz.

The xDSL wide band modulation approaches are susceptible regarding crosstalk interference that is introduced to the twisted pair transmission line and received by the modem.

Crosstalk occurs when wires are coupled, in particular between wire pairs of the same or a nearby bundle that are used for different signal transmission. Hence, data signals from one or more sources can be superimposed on and contaminate a data signal. The crosstalk comprises a near-end crosstalk (NEXT) and a far-end crosstalk (FEXT).

**A method for determining far-end crosstalk without requiring direct measurement of the interference can be found in the International Patent Application published as** WO2005/114861A1**.**

Based on such crosstalk **(NEXT, FEXT),** data signals transmitted over twisted-pair lines can be considerably degraded by the crosstalk interference generated on one or more adjacent twisted-pair phone line in the same and/or a nearby multi-core cable or bundle. With an increasing transmission speed, this situation even deteriorates, which may significantly limit a maximum data rate to be transmitted via a single line.

Furthermore, idle data sent induce crosstalk interference and hence disturb user data sent via other lines of, e.g., a multi-core cable. As there are typically 50 lines within one multi-core cable, such crosstalk could significantly impair the overall performance of the transmitting capability.

xDSL in particular utilizes Discrete Multi-Tone (DMT) modulation. The signal to be transmitted is obtained by an Inverse Fourier Transform of the frequency signal, which is constituted from a set of QAM symbols to be transmitted. Each so called DMT symbol may comprise of a plurality of QAM symbol which are organized as subcarriers of a width of 4,3125 kHz.

Dynamic Spectrum Management (DSM) Layer 3 (L3) is a technology regarding mainly VDSL2 transmission technique. It is used to enhance the performance of VDSL2 data transmission by reducing mutual interference.

**An example for using spectrum management or vectored DSL is disclosed in the International Patent Application Publication** WO2008/025581**. In this document a method is described wherein one part of an available frequency band is reserved exclusively for vectored DSL transmission whereas the other part of the frequency band may be used for vectored or standard DSL transmission.**

In case a new modem is connected to a DSM L3 controller, this new modem causes additional interference to existing connections. The DSM L3 controller cannot compensate such interference from the very beginning as it requires some time to adapt itself to the new situation. This typically results in a lower margin and thus in a higher amount of bit errors. It is even possible that a connection (or several connections) may be lost in case the bit errors cannot be corrected, e.g., by Reed-Solomon decoding.

Another disadvantage stems from the fact that the new modem runs a training phase over the whole frequency band that it later plans to use for data transmission. This may be necessary for the modem calculating the feasible data rate based on signal-to-noise ratio (SNR) measurements for each subcarrier. However, such training phase results in interference caused by the new modem, which interference affects the whole frequency band. Furthermore, such training needs a significant amount of time and thus may significantly deteriorate connections of existing modems.

The **problem** to be solved is to overcome the disadvantages as described above and in particular to reduce any interference and/or noise during start-up of a DSM system or based on an additional modem joining a DSM group.

This problem is solved according to the features of the independent claims. Further embodiments result from the depending claims.

In order to overcome this problem, a method for data processing is provided, wherein in a group comprising a network element and at least one modem at least one subcarrier is exclusively reserved by the network component for a training of the at least one modem to get connected to the network component.

In particular, several such subcarriers (in particular a group of subcarriers) may be reserved by the network component.

Such at least one subcarrier reserved can be efficiently utilized for a new modem joining or for a startup phase of the system (joining several such modems). The subcarrier(s) reserved allow reduced interference and/or crosstalk during a training of a modem to get connected to the network component.

Preferably, further modems are already connected to the network component when the modem tries to join the network (i.e. tries to get connected to the network component).

In an embodiment, the modem and the network component utilize a digital subscriber line.

In another embodiment, a group of subcarriers is reserved by said network component.

In a further embodiment, the network and the modem are members of a DSM L3 group.

In a next embodiment, the network component is or is associated with a digital subscriber line access multiplexer (DSLAM) and/or a central office (CO).

It is also an embodiment that said at least one subcarrier is reserved by carrier masking or by carrier shaping.

Pursuant to another embodiment, the network component further determines at least one of the following:
- the at least one subcarrier reserved;
- a power level for the at least one subcarrier reserved;
- subcarriers used for data transmission;
- power levels for the subcarriers used for data transmission.

According to an embodiment, the number of the at least one subcarrier reserved is small compared to a number of subcarriers used for normal operation, in particular for data transmission.

According to another embodiment, the training for the modem to get connected to the network component is performed in a low-interference scenario.

In yet another embodiment, a feedback of the modem is evaluated by the network component in particular by assessing a crosstalk and/or interference and/or by assessing a signal provided by the modem at the at least one subcarrier reserved.

The problem stated above is also solved by a device comprising a and/or being associated with a processor unit and/or a hard-wired circuit and/or a logic device that is arranged such that the method as described herein is executable on said processor unit.

According to an embodiment, the device is a communication device, in particular a or being associated with a central office or digital subscriber line access multiplexer.

The problem stated supra is further solved by a communication system comprising the device as described herein.

Embodiments of the invention are shown and illustrated in the following figure:

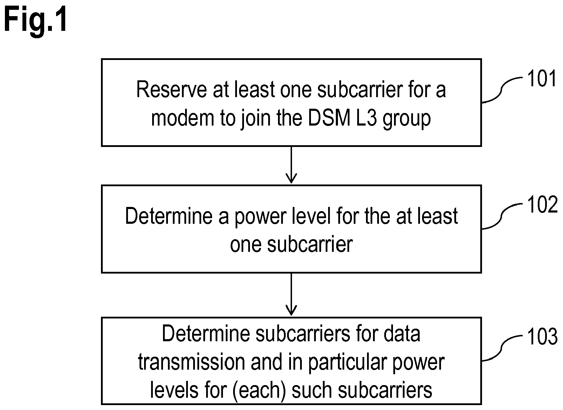

- Fig.1: shows a flow chart of steps of a method for reserving subcarriers in a DSM L3 group.

The approach provided herewith suggests that modems which are within a DSM L3 group reserve a (small) number or group of subcarriers (such subcarriers are also referred to as "bins") for modems to join the DSM L3 group.

This may in particular realized by a selective subcarrier masking or shaping, which is administered or controlled by the DSLAM. Hence, the DSLAM may decide
a) which bins of the bins available are used within the DSM L3 group for the data transmission and at which maximal transmit power level;
b) which bins of the bins available are used for joining modem connections and at which transmit power level.

Preferably, the number of reserved bins is small compared to the number of bins used for data transmission.

This bin arrangement allows the joining modem to train in a low-interference condition.

It is noted that preferably, the modem - after the training process is completed - utilizes bins that are different from the group of reserved bins. These bins other than the reserved bins may be used for normal data transmission purposes. As an alternative, the DSLAM and/or the DSM L3 controller may reserve said group of subcarriers dynamically, i.e. for assigning them to new modems to join the DSM L3 group and after they joined the group, the reserved bin could be used for normal data transmission. In order not to run out of bins for further modems to join, additional bins can be (on demand and/or dynamically) reserved by the DSM L3 controller.

It is further noted that DSM L3 controller may be any unit deployed and/or associated with a network unit, in particular a unit at the central office, e.g., a DSLAM.

The concept provided can be deployed via software implementation, e.g., on the DSLAM and/or any DSM L3 controller unit. Advantageously, no further hardware updates regarding the DSLAM and/or the modem side (at the customer premises, e.g., regarding the customer premises equipment CPE) are required.

It is in particular an advantage that the joining modem gains a higher performance by utilizing said reserved bins. Existing connection may advantageously not experience any significant deterioration.

**Fig.1** shows steps of a method run on a DSM L3 controller, e.g., on a DSLAM and/or at a CO. In a step 101 the DSM L3 controller reserves at least one subcarrier for a modem to join the DSM L3 group. In a step 102, the DSM L3 controller determines a power level for the at least one subcarrier. In an (optional) step 103, the DSM L3 controller determines subcarriers for data transmission and in particular power levels for (each) such subcarrier.

## Claims

1. A method for data processing,
- wherein in a group comprising a network element and at least one modem at least one subcarrier is exclusively reserved by the network component for a training of the at least one modem to get connected to the network component.

2. The method according to claim 1, wherein the modem and the network component utilize a digital subscriber line.

3. The method according to any of the preceding claims, wherein a group of subcarriers is reserved by said network component.

4. The method according to any of the preceding claims, wherein the network and the modem are members of a DSM L3 group.

5. The method according to any of the preceding claims, wherein the network component is or is associated with a digital subscriber line access multiplexer and/or a central office.

6. The method according to any of the preceding claims, wherein said at least one subcarrier is reserved by carrier masking or by carrier shaping.

7. The method according to any of the preceding claims, wherein the network component further determines at least one of the following:
- the at least one subcarrier reserved;
- a power level for the at least one subcarrier reserved;
- subcarriers used for data transmission;
- power levels for the subcarriers used for data transmission.

8. The method according to any of the preceding claims, wherein the number of the at least one subcarrier reserved is small compared to a number of subcarriers used for normal operation, in particular for data transmission.

9. The method according to any of the preceding claims, wherein the training for the modem to get connected to the network component is performed in a low-interference scenario.

10. The method according to any of the preceding claims, wherein a feedback of the modem is evaluated by the network component in particular by assessing a crosstalk and/or interference and/or by assessing a signal provided by the modem at the at least one subcarrier reserved.

11. A device comprising a and/or being associated with a processor unit and/or a hard-wired circuit and/or a logic device that is arranged such that the method according to any of the preceding claims is executable thereon.

12. The device according to claim 11, wherein said device is a communication device, in particular a or being associated with a central office or digital subscriber line access multiplexer.

13. Communication system comprising the device according to any of claims 11 or 12.

## Patentansprüche

1. Verfahren zur Datenverarbeitung,
- wobei in einer Gruppe, die ein Netzwerkelement und mindestens ein Modem umfasst, mindestens ein Unterträger durch die Netzwerkkomponente exklusiv für ein Anlernen des mindestens einen Modems, um sich mit der Netzwerkkomponente zu verbinden, reserviert wird.

2. Verfahren nach Anspruch 1, wobei das Modem und die Netzwerkkomponente eine digitale Teilnehmerleitung nutzen.

3. Verfahren nach einem der vorhergehenden Ansprüche, wobei eine Gruppe von Unterträgern durch die Netzwerkkomponente reserviert wird.

4. Verfahren nach einem der vorhergehenden Ansprüche, wobei das Netzwerk und das Modem Mitglieder einer DSM-L3-Gruppe sind.

5. Verfahren nach einem der vorhergehenden Ansprüche, wobei die Netzwerkkomponente ein Zugangsmultiplexer für eine digitale Teilnehmerleitung und/oder eine zentrale Vermittlungsstelle ist oder damit in Verbindung steht.

6. Verfahren nach einem der vorhergehenden Ansprüche, wobei der mindestens eine Unterträger durch Trägermaskierung oder durch Trägerformung reserviert wird.

7. Verfahren nach einem der vorhergehenden Ansprüche, wobei die Netzwerkkomponente ferner mindestens eins von Folgendem bestimmt:
- dem mindestens einen reservierten Unterträger;
- einem Leistungspegel für den mindestens einen reservierten Unterträger;
- Unterträgern, die für Datenübertragung genutzt werden;
- Leistungspegel für die Unterträger, die für Datenübertragung genutzt werden.

8. Verfahren nach einem der vorhergehenden Ansprüche, wobei die Anzahl des mindestens einen reservierten Unterträgers verglichen mit einer Anzahl von Unterträgern, die für Normalbetrieb genutzt werden, insbesondere für Datenübertragung, klein ist.

9. Verfahren nach einem der vorhergehenden Ansprüche, wobei das Anlernen für das Modem, um sich mit der Netzwerkkomponente zu verbinden, in einem störungsarmen Szenario durchgeführt wird.

10. Verfahren nach einem der vorhergehenden Ansprüche, wobei eine Rückmeldung des Modems durch die Netzwerkkomponente bewertet wird, insbesondere durch Beurteilung eines Übersprechens und/oder einer Störung und/oder durch Beurteilung eines Signals, das durch das Modem an dem mindestens einen reservierten Unterträger bereitgestellt wird.

11. Vorrichtung, die eine Prozessoreinheit und/oder eine festverdrahtete Schaltung und/oder eine Logikvorrichtung umfasst und/oder damit in Verbindung steht, die derart eingerichtet ist, dass das Verfahren nach einem der vorhergehenden Ansprüche darauf ausführbar ist.

12. Vorrichtung nach Anspruch 11, wobei die Vorrichtung eine Kommunikationsvorrichtung ist, insbesondere eine zentrale Vermittlungsstelle oder ein Zugangsmultiplexer für eine digitale Teilnehmerleitung, oder damit in Verbindung steht.

13. Kommunikationssystem umfassend die Vorrichtung nach einem der Ansprüche 11 oder 12.

## Revendications

1. Procédé de traitement de données,
- dans lequel, dans un groupe comprenant un élément de réseau et au moins un modem, au moins une sous-porteuse est réservée exclusivement par le composant de réseau pour apprendre audit au moins un modem d'obtenir une connexion au composant de réseau.

2. Procédé selon la revendication 1, dans lequel le modem et le composant de réseau utilisent une ligne d'abonné numérique.

3. Procédé selon l'une quelconque des revendications précédentes, dans lequel un groupe de sous-porteuses est réservé par ledit composant de réseau.

4. Procédé selon l'une quelconque des revendications précédentes, dans lequel le réseau et le modem sont des éléments d'un groupe DSM L3.

5. Procédé selon l'une quelconque des revendications précédentes, dans lequel le composant de réseau est ou est associé à un multiplexeur d'accès de ligne d'abonné numérique et/ou un commutateur urbain.

6. Procédé selon l'une quelconque des revendications précédentes, dans lequel ladite au moins une sous-porteuse est réservée par masquage de porteuse ou par mise en forme de porteuse.

7. Procédé selon l'une quelconque des revendications précédentes, dans lequel le composant de réseau détermine en outre au moins un élément parmi les suivants :
- ladite au moins une sous-porteuse réservée ;
- un niveau de puissance pour ladite au moins une sous-porteuse réservée ;
- des sous-porteuses utilisées pour la transmission de données ;
- des niveaux de puissance pour les sous-porteuses utilisées pour la transmission de données.

8. Procédé selon l'une quelconque des revendications précédentes, dans lequel le nombre de ladite au moins une sous-porteuse réservée est faible en comparaison avec un nombre de sous-porteuses utilisées pour un fonctionnement normal, en particulier pour la transmission de données.

9. Procédé selon l'une quelconque des revendications précédentes, dans lequel l'apprentissage pour que le modem obtienne une connexion au composant de réseau est effectué dans un scénario à faible interférence.

10. Procédé selon l'une quelconque des revendications précédentes, dans lequel un retour du modem est évalué par le composant de réseau, en particulier en évaluant une diaphonie et/ou une interférence et/ou en évaluant un signal fourni par le modem au niveau de ladite au moins une sous-porteuse réservée.

11. Dispositif comprenant et/ou étant associé à, une unité de processeur et/ou un circuit câblé et/ou un dispositif logique agencé(e) de telle sorte que le procédé selon l'une quelconque des revendications précédentes peut y être exécuté.

12. Dispositif selon la revendication 11, ledit dispositif étant un dispositif de communication, en particulier étant ou étant associé à un commutateur urbain ou un multiplexeur d'accès de ligne d'abonné numérique.

13. Système de communication comprenant le dispositif selon l'une quelconque des revendications 11 et 12.
